# EUROPEAN PATENT APPLICATION

(11) **EP 1 737 136 A2**
(43) Date of publication of application: **27.12.2006**
(21) Application number: 06076194.7
(22) Date of filing: 08.06.2006
(51) Int. Cl.: H04B 1/38

(54) **Wireless helmet communications system**

(30) Priority: 23.06.2005 US 159904
(71) Applicant: Delphi Technologies, Inc., Troy, Michigan 48007 (US)
(72) Inventor: Yard, Ricky A., Kokomo, IN 46901 (US); Harter Jr., Joseph E., Kokomo, IN 46902 (US); Scharenbroch, Gregory K., Kokomo, IN 46901 (US)
(74) Representative: Denton, Michael John

(57) **Abstract**

The present invention relates to a method and apparatus for a wireless communication system (10) for a motorcycle and motorcycle helmets (12, 14).

## Description

### TECHNICAL FIELD

The present invention relates to a method and apparatus for a wireless communication system for a motorcycle and motorcycle helmets.

### BACKGROUND OF THE INVENTION

Current systems for listening to music while riding a motorcycle generally involve a factory installed or aftermarket radio and speaker system mounted on the motorcycle. The speaker system must be powerful enough to overcome road and wind noise to allow a rider or riders to listen to the music when the motorcycle is at highway speeds. Often the music must be relatively loud to allow the rider to hear it, especially if the rider is wearing a helmet. When the motorcycle reduces speed or is traveling in a city, the volume is often too loud and must be reduced manually. Another system for listening to music while riding includes a helmet with integrated speakers. In this system, the rider usually has a wire connecting the helmet to a radio mounted on the motorcycle or the helmet and the speakers. These systems may also include a microphone integrated into the helmet to allow a riders to communicate with each other.

### SUMMARY OF THE INVENTION

One embodiment of the present invention includes a wireless helmet communication system comprising a transmitter configured to transmit a signal, a receiver coupled to a helmet and configured to receive the signal, a power source configured to supply power to the receiver, and a speaker positioned in the helmet and coupled to the receiver, the speaker configured to output sound corresponding to the signal.

Another embodiment of the present invention includes a audio system for a motorcycle comprising an audio source supported by the motorcycle, the audio source configured to produce a first signal, a transmitter supported by the motorcycle, the transmitter configured to receive the first signal and transmit a second signal, a helmet configured to be worn by a motorcycle rider, a receiver supported by the helmet and configured to receive the second signal and transmit a third signal, and a least one speaker positioned in the helmet, the speaker configured to receive the third signal and produce sound corresponding to the third signal.

Another embodiment of the present invention includes a wireless method of delivering signals from a motorcycle to a motorcycle helmet, the method including the steps of providing an audio source, a transmitter, a receiver, and a speaker, the audio source and the transmitter coupled to the motorcycle, the receiver and the speaker coupled to the motorcycle helmet, the speaker being coupled to the receiver, converting a first signal from the audio source to a second signal, transmitting the second signal from the transmitter, receiving the second signal at the receiver, converting the second signal to a third signal, the third signal being received by the speaker, and producing an audio signal from the speaker.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
Fig. 1 is a partial schematic of one embodiment of a motorcycle communication system 10;
Fig. 2 is a profile view of a motorcycle 8 including the motorcycle communication system 10 shown in Fig. 1; and
Fig. 3 is a front view of the motorcycle 8 shown in Fig. 2.

Corresponding reference characters indicate corresponding parts throughout the several views. Although the drawings represent embodiments of the present invention, the drawings are not necessarily to scale and certain features my be exaggerated in order to better illustrate and explain the present invention. The exemplifications set out herein illustrate embodiments of the invention in several forms and such exemplification is not to be construed as limiting the scope of the invention in any manner.

### DESCRIPTION OF THE PREFERRED EMBODIMENTS

The embodiments discussed below are not intended to be exhaustive or limit the invention to the precise forms disclosed in the following detailed description. Rather, the embodiments are chosen and described so that others skilled in the art may utilize their teachings.

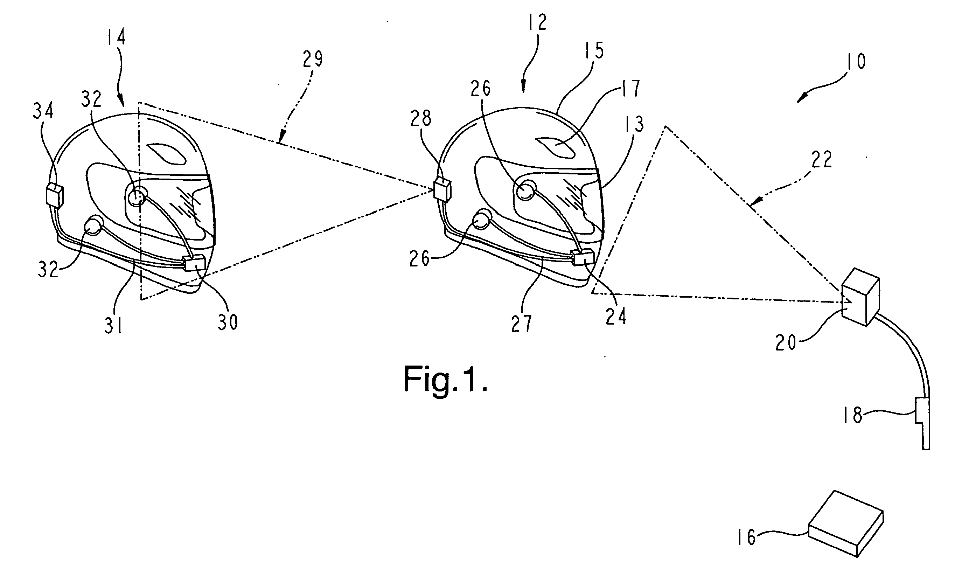

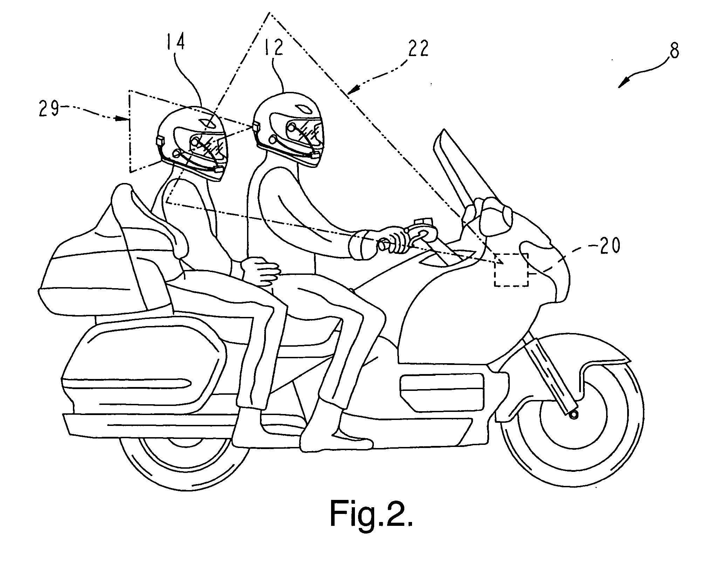

One embodiment of motorcycle communication system 10 is shown in Fig. 1. System 10 includes audio source 16, audio output 18, infrared (IR) transmitter 20, and motorcycle helmets 12 and 14. Audio output 18 is an audio connector or coupler such as an RCA style output, audio jack, ⅛ inch audio jack, or ¼ inch audio jack. Audio source 16 is coupled to the motorcycle and may include an AM/FM/XM radio, an MP3 player, a cellular phone, a portable handheld digital media device, a CD player, or any other suitable audio source. Audio output 18 is connected to audio source 16 to carry electrical signals from audio source 16 to IR transmitter 20. Infrared transmitter 20 is coupled to the motorcycle at a position facing or directed at the motorcycle rider's helmet when the rider is in the riding position, as shown in Fig. 2.

In this embodiment, motorcycle helmet 12 is a full-face helmet and includes outer shell 15, visor 13, and vent 17. Shell 15 provides a hard exterior cover to protect the rider. The interior (not shown) of helmet 12 includes a soft padding material to cushion the wearer's head during an accident. Visor 13 is generally transparent and may be repositionable to allow the wearer to rotate visor 13 upward. Vent 17 allows air to pass through the interior of helmet 12 to cool the wearer's head. In other embodiments (not shown), motorcycle helmet 12 may be an open-face helmet, i.e., not including a visor such as visor 13.

Motorcycle helmet 12 also includes IR receiver 24, headphone speakers 26, infrared light pipe 27, and signal conveyor 28. In this embodiment, IR receiver 24 is mounted on the chin portion of helmet 12 to receive IR signal 22 from IR transmitter 20 positioned on motorcycle 8. In an alternative embodiment, IR receiver 24 is mounted above the face shield of helmet 12. IR receiver 24 decodes IR signal 22 and outputs a signal to speakers 26. Speakers 26 are positioned in ear pockets within helmet 12. IR light pipe 27 and signal conveyor 28 function together as a re-transmitter or pass-thru for IR signal 22. IR signal 22 is received by IR receiver 24 and is delivered to signal conveyor 28 by IR light pipe 27. Signal 29 is then emitted from signal conveyor 28.

In this embodiment, motorcycle communication system 10 includes a second helmet 14 to allow a passenger on the motorcycle to listen to audio source 16 also. Helmet 14 includes IR receiver 30, headphone speakers 32, IR light pipe 31, and signal conveyor 34. Helmet 14 is similar to helmet 12 in this embodiment and performs the same functions. IR receiver 30 receives IR signal 29, decodes it, and outputs electrical signals to speakers 32. Speakers 32 convert the electrical signals into sound. Helmet 14 also includes an IR light pipe 31 and signal conveyor 34 to transmit the IR signal to any helmets positioned behind helmet 14.

In the embodiment described above, helmets 12 and 14 are prefabricated to incorporate IR receivers 24, 30 and speakers 26, 32. In other embodiments (not shown), the IR receiver and speakers may be added to existing helmets. Additionally, IR transmitter 20 may be factory installed or installed later as an after-market product.

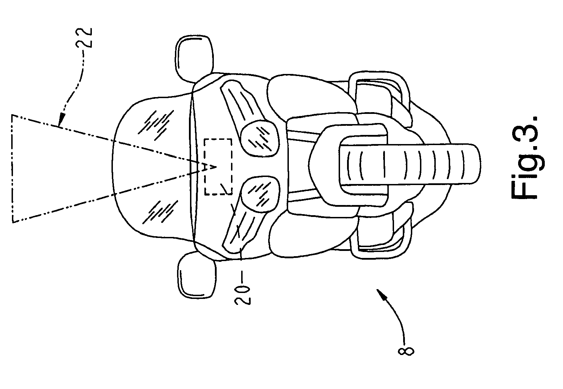

As shown in Figs. 2 and 3, IR transmitter 20 is placed in the front of the motorcycle 8 facing rearward. In this embodiment, IR transmitter 20 is placed in the instrument panel of motorcycle 8. When system 10 is activated by the rider, IR transmitter 20 receives electrical signals through audio output 18 from audio source 16, encodes the electrical signals into IR signals, and transmits them as IR signal 22. In this embodiment, IR transmitter 20 is positioned to provide IR light-emitting-diode (LED) coverage of approximately 50° by 50° or about 22 inches by 22 inches at about 24 inches from transmitter 20. When IR receiver 24 is placed on the chin region of helmet 12 or the forehead region and helmet 12 is facing forward, the rider may rotate helmet 12 about 180° in either direction without losing contact with the IR signal 22. When IR signal 22 is received by receiver 24 in helmet 12 IR receiver 24 decodes IR signal 22 into electrical signals which are sent to speakers 26 that produce sound corresponding to the original audio source signals. IR receiver 24 and speakers 26 are powered by a power source (not shown) such as a battery positioned on the helmet. IR receiver 24 also directs IR signal 22 to signal conveyor 28 through light pipe 27. Signal conveyor 28 transmits IR signal 29 to IR receiver 30 in helmet 14. Receiver 30 operates in the same fashion as receiver 24 of helmet 12. In other embodiments (not shown), light pipe 27 may be replaced with a retransmitter or any other suitable transmission media.

In other embodiments (not shown) of motorcycle communication system 10, other radio-frequency wireless signals may be employed such as the Bluetooth™ wireless protocol or another band and/or protocol instead of an IR signal. In another alternative embodiment (not shown), motorcycle communication system 10 also includes a microphone or microphones coupled to the receiver to allow the driver and passenger to speak with one another using an intercommunication (intercom) system.

While this invention has been described as having exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art of which this invention pertains.

## Claims

1. A wireless helmet communication system (10) comprising:
a transmitter (20) configured to transmit a signal (22);
a receiver (24) coupled to a helmet (12) and configured to receive the signal (22);
a power source configured to supply power to the receiver (24); and
a speaker (26) positioned in the helmet (12) and coupled to the receiver (24), the speaker (26) configured to output sound corresponding to the signal (22).

2. The wireless helmet communication system (10) of claim 1, wherein the transmitter(20) is one of an infrared transmitter, a radio frequency transmitter, a Bluetooth™ transmitter, and an optical transmitter.

3. The wireless helmet communication system(10) of claim 1, further comprising a signal conveyor (18) coupled to the helmet (12), the signal conveyor (18) being configured to convey the signal (22) to a re-transmitter (28).

4. The wireless helmet communication system (10) of claim 1, further comprising an audio source (16) and an audio-to-infrared converter configured to convert a first signal from the audio source (16) to an infrared signal.

5. The wireless helmet communication system (10) of claim 4, wherein the audio source (16) is one of an AM/FM/XM radio, a portable handheld digital media device, a CD player, an intercommunication system, and an MP3 player.

6. The wireless helmet communication system (10) of claim 1, further comprising a microphone coupled to the helmet (12).

7. The wireless helmet communication system (10) of claim 1, further comprising a second helmet (14) including a receiver (30), a power source, and a speaker (32) positioned in the helmet (14).

8. A audio system (10) for a motorcycle comprising:
an audio source (16) supported by the motorcycle, the audio source (16) configured to produce a first signal;
a transmitter(20) supported by the motorcycle, the transmitter (20) configured to receive the first signal and transmit a second signal (22);
a helmet (12) configured to be worn by a motorcycle rider;
a receiver (24) supported by the helmet (12) and configured to receive the second signal (22) and transmit a third signal; and
a least one speaker (26) positioned in the helmet (12), the speaker (26) configured to receive the third signal and produce sound corresponding to the third signal.

9. The audio system (10) of claim 8, further comprising a power source configured to supply power to the receiver (24) and the at least one speaker (26).

10. The audio system (10) of claim 8, further comprising a signal conveyor (18) positioned on the helmet (12), the signal conveyor (18) configured to convey the second signal (22).

11. The audio system (10) of claim 10, further comprising a second helmet (14) having a second receiver (30) and a second speaker (32), the second receiver (30) configured to receive second signal (22) and transmit a fourth signal to the second speaker (32), the speaker (32) configured to receive the fourth signal and produce sound corresponding to the fourth signal.

12. The audio system (10) of claim 8, wherein the transmitter (20) is one of an infrared transmitter, a Bluetooth™ transmitter, a radio-frequency transmitter, and an optical transmitter.

13. The audio system (10) of claim 8, wherein the audio source (16) is one of an AM/FM/XM radio, a CD player, a portable handheld digital media device, an intercom system, and an MP3 player.

14. The audio system (10) of claim 8, further comprising a microphone positioned within the first helmet (12), the microphone configured to receive audio input from the motorcycle rider.

15. The audio system (10) of claim 8, further comprising a converter configured to receive the first signal, convert it an IR signal, and output the IR signal to the transmitter (20).

16. A wireless method of delivering signals from a motorcycle to a motorcycle helmet (12), the method including the steps of:
providing an audio source (16), a transmitter (20), a receiver (24), and a speaker (26), the audio source (16) and the transmitter (20) coupled to the motorcycle, the receiver (24) and the speaker (26) coupled to the motorcycle helmet (12), the speaker (26) being coupled to the receiver (24);
converting a first signal from the audio source (16) to a second signal (22);
transmitting the second signal (22) from the transmitter (20);
receiving the second signal (22) at the receiver (24);
converting the second signal to a third signal, the third signal being received by the speaker (26); and
producing an audio signal from the speaker (26).

17. The wireless method of claim 16, wherein the transmitter (20) is one of an infrared transmitter, a Bluetooth™ transmitter, a radio-frequency transmitter, and an optical transmitter.

18. The wireless method of claim 16, wherein the audio source (16) is one of an AM/FM/XM radio, a CD player, a portable handheld digital media device, an intercom system, and an MP3 player.

19. The wireless method of claim 16, further comprising the steps of:
transmitting the second signal (22) to a second helmet (14) from a retransmitter (28) supported by the helmet (14).

20. A motorcycle helmet (12) including a wireless audio system (10) configured to receive a signal (22) from a transmitter (20) positioned on a motorcycle, the motorcycle helmet (12) comprising:
an outer shell (15);
a receiver (24) coupled to a helmet (12) and configured to receive a signal (22);
a power source configured to supply power to the receiver (24); and
a speaker (26) positioned in the helmet (12) and coupled to the receiver (24), the speaker (26) configured to output sound corresponding to the signal.

21. The motorcycle helmet (12) of claim 20, wherein the transmitter (20) is one of an infrared transmitter, a radio frequency transmitter, a Bluetooth™ transmitter, and an optical transmitter.

22. The motorcycle helmet (12) of claim 20, further comprising a signal conveyor (18) coupled to the helmet (12), the signal conveyor (18) being configured to covey the signal to a re-transmitter (28).

23. The motorcycle helmet (12) of claim 20, further comprising an audio source (16) and an audio-to-infrared converter configured to convert a first signal from the audio source (16) to an infrared signal.

24. The motorcycle helmet (12) of claim 23, wherein the audio source (16) is one of an AM/FM/XM radio, a portable handheld digital media device, a CD player, an intercommunication system, and an MP3 player.

25. The motorcycle helmet (12) of claim 20, further comprising a microphone coupled to the helmet (12).

26. The motorcycle helmet (12) of claim 20, further comprising a second motorcycle helmet (14) including a receiver (30), a power source, and a speaker (32) positioned in the helmet (14).
